# EUROPEAN PATENT SPECIFICATION

(11) **EP 1 748 885 B1**
(45) Date of publication and mention of the grant of the patent: **20.01.2016**
(21) Application number: 05744507.4
(22) Date of filing: 18.05.2005
(51) Int. Cl.: B32B 15/08

(54) **IMPROVED STRUCTURAL SANDWICH PLATE MEMBERS**
VERBESSERTE STRUKTURELLE VERBUNDPLATTENGLIEDER
ÉLÉMENT STRUCTUREL À PLAQUES EN SANDWICH AMÉLIORÉ

(30) Priority: 21.05.2004 GB 0411413
(43) Date of publication of application: 07.02.2007
(73) Proprietor: Intelligent Engineering (Bahamas) Limited, Nassau (BS)
(72) Inventor: KENNEDY, Stephen John, Ottawa, Ontario K17 0N2 (CA); WILSON, Howard Mackenzie, Boldre, Lymington SO41 8PT (GB)
(74) Representative: Leeming, John Gerard
(86) International application number: PCT/GB2005/001958
(87) International publication number: WO 2005/113235

(56) References cited:
- WO-A-99/58333
- WO-A-03/101726
- GB-A- 2 258 669
- US-A- 5 741 571
- US-A- 5 773 783
- US-A1- 2004 010 981

## Description

The present invention relates to structural sandwich plate members which comprise two outer plates and a core of plastics or polymer material bonded to the outer plates with sufficient strength to substantially contribute to the structural strength of the member.

Structural sandwich plate members are described in US 5,778,813 and US 6,050,208, and comprise outer metal, e.g. steel, plates bonded together with an intermediate elastomer core, e.g. of unfoamed polyurethane. These sandwich plate systems may be used in many forms of construction to replace stiffened steel plates, formed steel plates, reinforced concrete or composite steel-concrete structures and greatly simplify the resultant structures, improving strength and structural performance (e.g. stiffness, damping characteristics) while saving weight. Further developments of these structural sandwich plate members are described in WO 01/32414. As described therein, foam forms may be incorporated in the core layer to reduce weight and transverse metal shear plates may be added to improve stiffness.

According to the teachings of WO 01/32414 the foam forms can be either hollow or solid. Hollow forms generate a greater weight reduction and are therefore advantageous. The forms described in that document are not confined to being made of light weight foam material and can also be make of other materials such as wood or steel boxes, plastic extruded shapes and hollow plastic spheres.

A particular advantage of such structural sandwich plate members is that shear forces are transferred by the core and its natural adhesion to the outer plates. A sufficient bond is achieved on casting of the core material so that no special means is required to connect the core and the outer plates (save for suitable surface preparation), which makes fabrication of the plates rapid and economic. For certain environmental or operational loads and conditions - such as: temperatures below -20°C; attachment of fittings post injection where welding may reduce the bond strength; or where direct tensile loads in excess of the local bond strength are to be applied - mechanical methods must be used to enhance the bond strength between the core and metal face plates.

US 2004/0010981 discloses a two-wired seating riser for a sports stadium comprising upper and lower metal plates bonded together by a solid elastomer core. The elastomer core has different thicknesses in the treads and rises. The lower tread has a lip portion in which the metal plates are flared to facilitate alignment with the riser below.

WO 99/58333 discloses a composite structural laminate comprising two outer metal, e.g. steel, layers and an intermediate elastomer core, e.g. of unfoamed polyurethane. The elastomer has a modular of elasticity of greater than about 250 Mpa and tensile and compressive strengths of at least 20 Mpa. The strength of the bond between metal and elastomer is at least 3 Mpa. The composite structural laminate member acts as a single member under load, buckling globally, not asymmetrically.

It is an aim of the present invention to provide structural sandwich plate members that have an improved connection between core and outer plates.

According to the present invention, there is provided: a structural sandwich plate member comprising:
first and second outer metal plates;
a core of plastics or polymer material bonded to said outer plates with sufficient strength to transfer shear forces therebetween;
at least one mechanical connector welded to an inner surface of one of the outer plates, the mechanical connector comprising a cylindrical metal body extending into said core generally perpendicularly to said one outer plate; and
wherein the or each mechanical connector extends for only part of the thickness of said core.

The mechanical connector (s), may be studs, may be applied either before casting of the core material or after the core has been set. In either case, the connector provides an improved connection between the core and the outer plates in both shear and tension by mechanical interlock. The connector can therefore prevent localised delamination in the event, for example, of damage due to welding to the outer plates, if large tension loads are applied to one of the outer plates, or if the plates are subjected to extreme cold temperatures. A connector may be welded to both outer plates to provide a direct path to transfer forces between the outer plates to mitigate delamination.

Before the casting of the core material, the connectors can be attached by arc stud welding or variants on that technique. Use of a stud welding "gun" allows connectors to be attached extremely quickly and may also be automated. The connectors preferably have an enlarged head to provide a mechanical interlock with the core material in more than one direction. The studs can be applied to either or both outer plates and are preferably located in areas where enhanced local bond strength is required.

After fabrication of a structural sandwich plate member, the studs may be attached by drilling through one outer plate and into the core and then friction welding the stud in the hole. The hole in the outer plate is preferably countersunk and the stud is provided with an enlarged head and matching bevel. The stud is preferably slightly longer, from the bottom of the bevel to the tip, than the distance between the bottom of the countersink and the other outer plate. Then, when the friction weld is formed, a weld pool is first formed between the end of the stud and the distal outer plate and when the stud sinks into that the bevel of the head of the stud contacts the countersink in the proximal outer plate and forms a weld there. The part of the enlarged head that remains above the proximal outer plate after the weld is formed may be ground flush with the outer plate or used as an attachment point.

The materials, dimensions and general properties of the outer plates of the structural sandwich plate member of the invention may be chosen as desired for the particular use to which the structural sandwich plate member is to be put and in general may be as described in US-5,778,813 and US-6,050,208. Steel or stainless steel is commonly used in thicknesses of 0.5 to 20mm and aluminium may be used where light weight is desirable. Similarly, the plastics or polymer core may be any suitable material, for example an elastomer such as polyurethane, as described in US-5,778,813 and US-6,050,208. The material of the studs should be the same or weld compatible with the material of the outer metal plates and the dimensions of the studs will be selected according to the loads to be expected in use. In the case of a full-thickness stud to be welded to outer plates of dissimilar metals a two part stud might be used.

The studs may of course be used in structural sandwich plate members formed as new and in those formed as over- or inner-lays to existing structures, as described in International Applications WO02/20341 and WO 2004/038106.

Further, the invention provides a method of manufacturing a structural sandwich plate member comprising the steps of:
providing first and second outer metal plates,
welding at least one stud to an inner surface of one of the outer plates;
placing said outer plates in a spaced-apart relationship with said at least one stud projecting only part way into the space defined between said outer plates; injecting uncured plastics or polymer material to fill said space defined between said outer plates; and
allowing said plastics or polymer material to cure to bond said outer plates together with sufficient strength to transfer shear forces therebetween.

The present invention will be described below with reference to exemplary embodiments and the accompanying schematic drawings, in which:
Figure 1 is a cross-sectional view of a structural sandwich plate member according to a first embodiment of the present invention;
Figure 2 is a cross-sectional view of a structural sandwich plate member according to a second embodiment of the present invention; and
Figure 3 is a cross-sectional view of a structural sandwich plate member according to the second embodiment of the present invention and the stud, prior to insertion of the stud and

In the various drawings, like parts are indicated by like reference numerals.

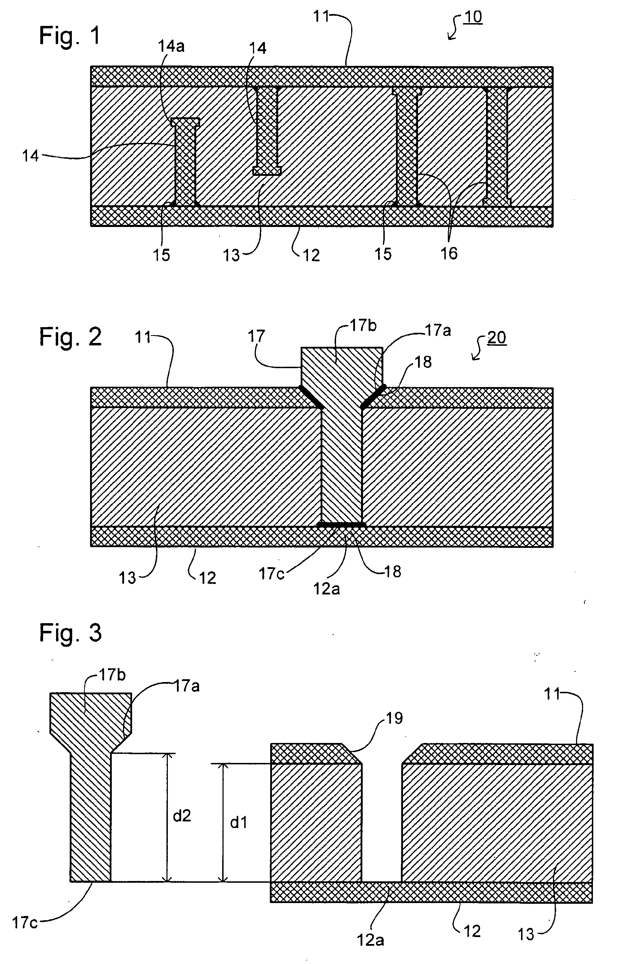

The structural sandwich plate member shown in Figure 1 comprises upper and lower outer plates (faceplates) 11,12 which may be of steel or aluminium and have a thickness, for example, in the range of from 0.5 to 20mm. Edge plates are welded between the face plates 11,12 around their outer peripheries to form a closed cavity. In the cavity between the face plates 11, 12 is a core 13 of plastics or polymer material, preferably a compact thermosetting material such as polyurethane elastomer. This core may have a thickness in the range of from 15 to 200mm; in the present application 50mm is suitable. The core 13 is bonded to the face plates 11, 12 with sufficient strength and has sufficient mechanical properties to transfer shear forces expected in use between the two face plates. The bond strength between the core 13 and face plates 11, 12 should be greater than 3MPa, preferably 6MPa, and the modulus of elasticity of the core material should be greater than 200MPa, preferably greater than 250MPa, especially if expected to be exposed to high temperatures in use. For low load applications, such as floor panels, where the typical use and occupancy loads are of the order of 1.4kPa to 7.2kPa, the bond strength may be lower, e.g. approximately 0.5MPa. By virtue of the core layer, the structural sandwich plate member has a strength and load bearing capacity of a stiffened steel plate having a substantially greater plate thickness and significant additional stiffening. The plate, of course, need not be flat but may take any form required for its intended use.

To improve the connection between the core and the outer plates, a number of mechanical connectors, in this embodiment studs 14, 16, are provided on the inners surfaces of either or both of the outer plates, projecting into the core. The studs may project only part of the core thickness, as in studs 14, or the full core thickness, as in studs 16.

The studs are made of the same material as the outer plate to which they are attached, or a weld compatible material, and are attached by welds 15. Full-thickness studs need not be welded to both outer plates.

An enlarged head 14a is preferably provided on the studs to improve keying (mechanical interlock) to the core material. The studs may be specifically designed for the application or may be standard studs available "off-the-shelf" from a variety of suppliers.

To manufacture the structural sandwich plate member 10, studs are welded as required to the inner surfaces of one or both outer metal plates. This is preferably done by an arc welding process and a stud welding "gun" of conventional type can be used to attach studs with ease and great rapidity. The edge plates are then welded around the periphery of lower faceplate 11. At this stage, any precast sections of the core may be put in place as well as any forms shear plates or other fittings that may be desired. Then, the upper faceplate 12 is welded to the edge plates or perimeter bars or connection details to form a closed cavity and the plastics or polymer material injected to form core 13. The injected material is then allowed to cure and the injection ports used in the injection step ground off and sealed along with the vent holes. These steps may be performed in situ, or off-site in factory conditions and the finished panel transported to the installation site.

The procedure is essentially the same where shear studs are used in a structural sandwich plate formed as an overlay to an existing structure. The studs may be welded to the existing plate or the new overlay plate, or both, and may act as spacers to position and/or support the new overlay plate relative to the existing plate.

A second embodiment of the present invention is shown in Figure 2. The structural sandwich plate member 20 according to the second embodiment of the invention is similar to the first embodiment but the mechanical connectors (studs) are applied after manufacture of the plate, as described below.

In the second embodiment, the stud 17 is fitted from the outside after fabrication of the complete structural sandwich plate member. Stud 17 penetrates a first, proximal one of the outer plates and extends through the full core thickness to the second, distal outer plate. Friction welds 18 are formed between a bevel 17a on the enlarged head 17b of the stud 17 and the countersunk hole in the proximal outer plate 11 and between the distal tip 17c of stud 17 and a recess 12a formed in the inner surface of distal outer plate 12. The tip 17c may be flat, as illustrated, or bevelled. Also, the head 17b may be flat, rather than bevelled, to provide a landing edge onto the top plate.

The process for fitting the shear stud to the previously fabricated structural sandwich plate member is as follows. First a hole is drilled through the proximal plate 11, core 13 and into distal plate 12. The depth of this hole is controlled to be within a specified tolerance of a nominal depth d1, measured from the inner surface of the proximal plate 11. The hole 19 in the proximal plate 11 is then countersunk to a predetermined size. The shank of stud 17 has a nominal length d2, from the bottom of the bevel 17a to its tip, that is slightly greater than depth d1. The tolerances on d1 and d2 must be such that d2 is always greater than d1 and within normal tolerances associated with friction welding. The tolerance on the length of the stud must also be such as to provide adequate weld fusion between the end 17c of the connector and the weld point 12a as well as between the bevel 17a and countersink 19.

The stud 17 is then inserted into the hole and rotated at high speed whilst being pressed into the hole - this can be performed by a conventional friction stud welding device. The required pressure can be obtained using a strong back, if the sandwich plate member is loose, or by electromagnetic or vacuum clamps, especially if the plate member is already installed in a structure. Initially, the tip 17c of the stud will contact the recess 12a in the distal plate but as the weld pool is formed there, the stud will go in further until contact is made between the bevel 17a and countersink 19 and a weld pool is formed there. When the rotation of the stud is stopped, the weld pools will solidify and the stud will be welded at each end. It will be appreciated that the thickness of the core of the sandwich plate member must be to the same tolerance as the stud to ensure fusion of the stud to both face plates. The weld quality may be verified by normal nondestructive testing methods such as ultrasonic or x-ray inspection techniques.

After the stud has been welded in place, the protruding head and any flash collar may be ground off. Alternatively, the head may be used as a point of attachment for a fixing and may therefore be provided with an exposed thread. In the case of particularly heavy loads, a number of studs may be installed in close proximity; the only limits to their closeness being the requirement that the countersunk holes in the top plate not interfere and any requirements imposed by the welding machine head. Studs may be installed for either or both sides of the plate as convenient for access and ease of installation, especially if the plate is already installed in a structure.

By appropriate choice of the size and spacing of the studs and perforations, the upper plate can be connected to the lower plate sufficiently to restrain it against the pressure experienced during injection, thus obviating the need for external restraints. Depending on the application, the studs need not contribute significantly to the strength of the completed structural sandwich plate member but the size and spacing of the studs can be chosen to provide additional strength if desired. The perforations 11a should be made as small as possible whilst still allowing easy formation of the tack welds whereas the enlarged heads 20a should be made large enough to ensure, given allowed tolerances in the positions of the perforations and studs, that the holes are completely within the areas of the heads of the studs and there is no leak to the core cavity.

It will be appreciated that the above description is not intended to be limiting and that other modifications and variations fall within the scope of the present invention, which is defined by the appended claims.

## Claims

1. A structural sandwich plate member comprising:
first and second outer metal plates;
a core of plastics or polymer material bonded to said outer plates with sufficient strength to transfer shear forces therebetween;
at least one mechanical connector welded to an inner surface of one of the outer plates, the mechanical connector comprising a cylindrical metal body extending into said core generally perpendicularly to said one outer plate; and
wherein the or each mechanical connector extends for only part of the thickness of said core.

2. A structural sandwich plate member according to claim 1 wherein said mechanical connector has been welded to one of said outer plates by arc stud welding prior to formation of said core.

3. A structural sandwich plate member according to claim 2 wherein a plurality of mechanical connectors are provided, each of said outer plates at least one connector welded thereto.

4. A structural sandwich plate member according to claim 1,2 or 3 wherein the or each mechanical connector has an enlarged head.

5. A method of manufacturing a structural sandwich plate member comprising the steps of:
providing first and second outer metal plates,
welding at least one stud to an inner surface of one of the outer plates;
placing said outer plates in a spaced-apart relationship with said at least one stud projecting only part way into the space defined between said outer plates;
injecting uncured plastics or polymer material to fill said space defined between said outer plates; and
allowing said plastics or polymer material to cure to bond said outer plates together with sufficient strength to transfer shear forces therebetween.

6. A method according to claim 5 wherein said welding step is performed by electric arc stud welding.

## Patentansprüche

1. Strukturelles Sandwichplattenelement, umfassend:
erste und zweite äußere Metallplatten;
ein Kern aus Plastik oder Polymermaterial, welcher mit den äußeren Platten ausreichend stark verbunden ist, um die Scherkräfte zwischen diesen zu übertragen;
mindestens ein mechanisches Bindeglied, welches an eine innere Oberfläche einer der äußeren Platten geschweißt ist, wobei das mechanische Bindeglied einen zylindrischen Metallkörper umfasst, welcher sich im Wesentlichen senkrecht zu der äußeren Platte in den Kern erstreckt; und
wobei das oder jedes mechanische Bindeglied sich nur in einen begrenzten Teil der Dicke des Kerns ausdehnt.

2. Strukturelles Sandwichplattenelement nach Anspruch 1, wobei das mechanische Bindeglied vor Ausbildung des Kerns durch Lichtbogenbolzenschweißen an eine der äußeren Platten geschweißt wurde.

3. Strukturelles Sandwichplattenelement nach Anspruch 2, wobei eine Vielzahl von mechanischen Bindegliedern vorgesehen ist, wobei an jede der äußeren Platten mindestens ein Bindeglied geschweißt ist.

4. Strukturelles Sandwichplattenelement nach Anspruch 1,2 oder 3, wobei das oder jedes mechanische Bindeglied einen vergrößerten Kopf hat.

5. Verfahren zur Herstellung eines strukturellen Sandwichplattenelements, die folgenden Schritte umfassend:
Bereitstellen einer ersten und zweiten äußeren Metallplatte,
Schweißen von mindestens einem Bolzen an eine innere Oberfläche von einer der äußeren Platten;
Platzieren der äußeren Platte in einer räumlich getrennten Anordnung, wobei der mindestens eine Bolzen zum Teil in den durch die äußeren Platten definierten Raum ragt;
Einspritzen von unvernetztem Plastik oder Polymermaterial, um den durch die äußeren Platten definierten Raum zu füllen; und
Zulassen, dass das Plastik oder Polymermaterial aushärtet, um die äußeren Platten mit genügend Stärke zu verbinden, damit Scherkräfte zwischen diesen übertragen werden können.

6. Methode nach Anspruch 5, wobei der Schritt des Schweißens durch Lichtbogenbolzenschweißen ausgeführt wird.

## Revendications

1. Élément structurel à plaques en sandwich comprenant :
des première et seconde plaques en métal externes ;
une âme de matière plastique ou polymère collée auxdites plaques externes avec une résistance suffisante pour transférer des forces de cisaillement entre elles ;
au moins un raccord mécanique soudé sur une surface interne de l'une des plaques externes, le raccord mécanique comprenant un corps en métal cylindrique s'étendant dans ladite âme de manière généralement perpendiculaire à ladite plaque externe ; et
le ou chaque raccord mécanique s'étendant seulement sur une partie de l'épaisseur de ladite âme.

2. Élément structurel à plaques en sandwich selon la revendication 1, dans lequel ledit raccord mécanique a été soudé sur l'une desdites plaques externes par soudage à l'arc de goujons avant la formation de ladite âme.

3. Élément structurel à plaques en sandwich selon la revendication 2, dans lequel plusieurs raccords mécaniques sont prévus, chacune desdites plaques externes ayant au moins un raccord soudé à celle-ci.

4. Élément structurel à plaques en sandwich selon la revendication 1, 2 ou 3, dans lequel le ou chaque raccord mécanique présente une tête agrandie.

5. Procédé de fabrication d'un élément structurel à plaques en sandwich, comprenant les étapes consistant à :
fournir des première et seconde plaques en métal externes,
souder au moins un goujon sur une surface interne de l'une des plaques externes ;
placer lesdites plaques externes en relation espacée avec un des goujons en saillie seulement sur une partie de la distance dans l'espace défini entre lesdites plaques externes ;
injecter une matière plastique ou polymère non durcie pour remplir ledit espace défini entre lesdites plaques externes ; et
laisser ladite matière plastique ou polymère durcir pour coller lesdites plaques externes afin de transférer des forces de cisaillement entre elles.

6. Procédé selon la revendication 5, dans lequel ladite étape de soudage est effectuée par soudage à l'arc de goujons.
